# EUROPEAN PATENT APPLICATION

(11) **EP 4 779 618 A2**
(43) Date of publication of application: **22.07.2026**
(21) Application number: 26163031.3
(22) Date of filing: 10.12.2020
(51) Int. Cl.: G09F 9/30

(54) **FLEXIBLE DISPLAY AND FOLDABLE DEVICE**

(30) Priority: 27.12.2019 CN 201911378915; 23.04.2020 CN 202010327242
(62) Divisional of application: 24201391.0
(71) Applicant: HUAWEI TECHNOLOGIES CO., LTD., Shenzhen 518129 (CN)
(72) Inventor: HUANG, Bo, Shenzhen, 518129 (CN); WANG, Changyong, Shenzhen, 518129 (CN); XU, Zhixiao, Shenzhen, 518129 (CN); HUANG, Tao, Shenzhen, 518129 (CN); ZHANG, Hui, Shenzhen, 518129 (CN); LI, Xia, Shenzhen, 518129 (CN)
(74) Representative: Gill Jennings & Every LLP

(57) **Abstract**

A flexible display and a foldable device are provided, and relate to the field of electronic device technologies, to resolve a technical problem of a poor folding effect of a flexible display. A flexible display (10) includes a flexible display panel (11) and a holding plate (12). The flexible display panel (11) has a back surface and a display surface configured to display an image. The holding plate (12) is disposed on the back surface of the flexible display panel (11), and is configured to provide support for the flexible display panel (11). The holding plate (12) is provided with a first fixed part (121), a first bending part (122), a first connecting part (123), a main bending part (124), a second connecting part (125), a second bending part (126), and a second fixed part (127) that are sequentially disposed along a first direction. The first direction is parallel to a plate surface of the holding plate (12). After the flexible display (10) is folded, the main bending part (124) may bend toward a folding direction, and the first bending part (122) and the second bending part (126) may bend away from the folding direction, so that a folding form of the flexible display (10) can be effectively controlled. This design can effectively control a folded state, to improve a folding effect.

## Description

### CROSS-REFERENCE TO RELATED APPLICATIONS

This application claims priority to Chinese Patent Application No. 201911378915.5, filed with the China National Intellectual Property Administration on December 27, 2019 and entitled "FOLDABLE TERMINAL", which is incorporated herein by reference in its entirety. This application claims priority to Chinese Patent Application No. 202010327242.7, filed with the China National Intellectual Property Administration on April 23, 2020 and entitled "FLEXIBLE DISPLAY AND FOLDABLE DEVICE", which is incorporated herein by reference in its entirety.

### TECHNICAL FIELD

This application relates to the field of electronic device technologies, and in particular, to a flexible display and a foldable device.

### BACKGROUND

In a foldable device, a flexible display is one of key components for implementing a folding function. The flexible display may include a flexible display panel and a holding plate located on the back of the flexible display panel. The flexible display panel is highly flexible, so that the flexible display panel can be randomly bent. The holding plate has specific rigidity, to provide support for the flexible display panel. However, when the flexible display is folded, the holding plate limits a minimum bending radius of the flexible display to some extent. Therefore, a folding effect of the flexible display is affected. Specifically, after the foldable device is folded, a folded part forms a large bulge, and the bulge increases a maximum thickness of the folded foldable device, which is not conducive to improving portability of the folded foldable device.

### SUMMARY

This application provides a flexible display and a foldable device, to improve a folding effect.

According to one aspect, an embodiment of this application provides a flexible display, including a flexible display panel and a holding plate. The flexible display panel has a back surface and a display surface configured to display an image. The holding plate is disposed on the back surface of the flexible display panel, and is configured to provide support for the flexible display panel. The holding plate is provided with a first fixed part, a first bending part, a first connecting part, a main bending part, a second connecting part, a second bending part, and a second fixed part that are sequentially disposed along a first direction, and the first direction is parallel to a plate surface of the holding plate. After the flexible display is folded, the main bending part may bend toward a folding direction, and the first bending part and the second bending part may bend away from the folding direction, so that a folding form of the flexible display can be effectively controlled. In addition, after the flexible display is unfolded, the holding plate can improve flatness of the flexible display panel by using rigidity of the holding plate, so that a display effect of the flexible display panel is effectively improved.

In a specific implementation, after the flexible display is unfolded, a flat plate-like structure may be formed. To be specific, the surface that is of the flexible display panel and that is configured to display the image may have high flatness, to provide a good display effect and good visual experience. In addition, after the flexible display is folded, the first fixed part and the second fixed part may be parallel to each other, to reduce a volume occupied by the flexible display as much as possible. In addition, a size of a contour enclosed by the flexible display can be effectively reduced, to further improve security of the flexible display.

In a specific implementation, to enable the first bending part, the main bending part, and the second bending part to be more flexible than the first fixed part, the first connecting part, the second connecting part, and the second fixed part,
in an implementation, thicknesses of the first fixed part, the first connecting part, the second connecting part, and the second fixed part may be greater than thicknesses of the first bending part, the main bending part, and the second bending part. Specifically, when a thickness of the holding plate is uneven, an area with a smaller thickness is more easily bent, and correspondingly, an area with a larger thickness is more difficult to be bent.

In another implementation, material densities of the first fixed part, the first connecting part, the second connecting part, and the second fixed part may be greater than material densities of the first bending part, the main bending part, and the second bending part. Specifically, when the entire holding plate is made of a same material, and weights of materials per unit volume are different in different areas, an area in which a weight of a material per unit volume is lighter (that is, a material density is lower) is more easily bent, and correspondingly, an area in which a weight of a material per unit volume is heavier (that is, a material density is higher) is more difficult to be bent.

In another implementation, through holes may be disposed in the first bending part, the main bending part, and the second bending part. The first bending part is used as an example. After a through hole that penetrates upper and lower plate surfaces of the holding plate is disposed in the first bending part, rigidity of the area is reduced. When the holding plate is bent, bending and deformation more easily occur in the area in which the through holes are disposed. Correspondingly, through holes are disposed in the main bending part and the second bending part. This can also reduce rigidity of the areas in which the through holes are disposed.

To enable the first bending part, the main bending part, and the second bending part to be more easily bent, a plurality of through holes may be arranged from one edge to another edge of the holding plate in a second direction. The second direction is parallel to the plate surface of the holding plate, and is perpendicular to the first direction.

In addition, to enable the first bending part, the main bending part, and the second bending part each to have a bending area with a specific size, a plurality of columns of through holes may be disposed in the first bending part along the first direction, and correspondingly, a plurality of columns of through holes may be disposed in the main bending part along the first direction, and a plurality of columns of through holes may be disposed in the second bending part along the first direction. During specific configuration, two adjacent columns of through holes may be disposed in a staggered manner, to ensure that the first bending part, the main bending part, and the second bending part have strong force-bearing performance and fatigue resistance.

In addition, considering that a bending angle of the main bending part may be larger in actual application, an area of the main bending part may be larger than areas of the first bending part and the second bending part. Specifically, more columns of through holes may be disposed in the main bending part, fewer columns of through holes may be disposed in the first bending part, and fewer columns of through holes may also be disposed in the second bending part. A quantity of columns of through holes disposed in the first bending part may be the same as or different from a quantity of columns of through holes disposed in the second bending part. In addition, the first connecting part and the second connecting part may be symmetrically disposed or asymmetrically disposed with respective to the main bending part. Alternatively, it may be understood that, in the first direction, a length of the first connecting part may be the same as or different from a length of the second connecting part. Correspondingly, the first bending part and the second bending part may be symmetrically disposed or asymmetrically disposed with respective to the main bending part. Alternatively, it may be understood that, in the first direction, a quantity of columns of through holes disposed in the first bending part may be the same as or different from a quantity of columns of through holes disposed in the second bending part. Correspondingly, the first fixed part and the second fixed part may be symmetrically disposed or asymmetrically disposed with respective to the main bending part. Alternatively, it may be understood that, in the first direction, a length of the first fixed part may be the same as or different from a length of the second fixed part.

In addition, in a specific implementation, a cross-sectional profile of the through hole may be a circle, an ellipse, or another shape.

For example, the cross-sectional profile of the through hole is long-strip-shaped. In addition, to improve bendability of the first bending part, the main bending part, and the second bending part, a length direction of the cross-sectional profile of the through hole is parallel to the second direction (or perpendicular to the first direction).

During specific configuration, the holding plate may be attached to the back of the flexible display panel by using a bonding layer. The bonding layer may be specifically double-sided tape, or may be an adhesive layer including a material such as polyurethane, polyethylene, or polypropylene. In a specific implementation, a shape profile and a size of the holding plate may be respectively the same as or different from a shape profile and a size of the flexible display panel. For example, the holding plate and the flexible display panel may be rectangular structures of a same size. One plate surface of the holding plate is completely attached to the back of the flexible display panel, to improve strength of a connection between the holding plate and the flexible display panel and consistency of bending and deforming the holding plate and the flexible display panel.

According to another aspect, an embodiment of this application further provides a foldable device, including a first housing, a second housing, a hinge, and the foregoing flexible display. The first housing and the second housing are connected through the hinge, to implement a folding function of the foldable device. The first fixed part of the holding plate is fixedly connected to the first housing, and the second fixed part of the holding plate is fixedly connected to the second housing. When the first housing and the second housing are folded or unfolded relative to each other, the holding plate (or the flexible display) can also be folded or unfolded accordingly.

In a specific implementation, the hinge may be in various structures and bending forms. Alternatively, the flexible display may be fixedly connected to some structures in the hinge.

For example, the hinge may include a main body and a first foldable assembly and a second foldable assembly that are symmetrically disposed with respect to the main body. The first foldable assembly and the second foldable assembly can rotate toward each other in opposite directions or away from each other relative to the main body, to implement a folding function of the hinge. The first foldable assembly may include a first swing connecting rod, a first swing arm, a first driven arm, and a first support plate. One end of the first swing arm is rotatably connected to the main body, and the other end of the first swing arm is rotatably connected to the first swing connecting rod. One end of the first driven arm is rotatably connected to the main body, and the other end of the first driven arm is slidably connected to the first swing connecting rod. Rotation axis centers of the first driven arm and the first swing arm on the main body are parallel to each other and do not coincide, so that a length of the first foldable assembly can change when the first foldable assembly rotates relative to the main body. The second foldable assembly may include a second swing connecting rod, a second swing arm, a second driven arm, and a second support plate. One end of the second swing arm is rotatably connected to the main body, and the other end of the second swing arm is rotatably connected to the second swing connecting rod. One end of the second driven arm is rotatably connected to the main body, and the other end of the second driven arm is slidably connected to the second swing connecting rod. Rotation axis centers of the second driven arm and the second swing arm on the main body are parallel to each other and do not coincide, so that a length of the second foldable assembly can change when the second foldable assembly rotates relative to the main body.

When the hinge is folded, the first swing connecting rod and the second swing connecting rod rotate toward each other in opposite directions, the first swing connecting rod drives the first driven arm to rotate synchronously, the first swing connecting rod and the first swing arm extend and move relative to the first driven arm, the second swing connecting rod drives the second driven arm to rotate synchronously, and the second swing connecting rod and the second swing arm extend and move relative to the second driven arm, to increase a length of the hinge; and the first swing arm or the first driven arm that is slidably connected to the first support plate drives the first support plate to rotate forward relative to the first swing connecting rod (for example, when the first swing connecting rod rotates clockwise, the first support plate rotates clockwise relative to the first swing connecting rod), and the second swing arm or the second driven arm that is slidably connected to the second support plate drives the second support plate to rotate forward relative to the second swing connecting rod (for example, when the second swing connecting rod rotates counterclockwise, the second support plate rotates counterclockwise relative to the second swing connecting rod), so that the first support plate, the second support plate, and the main body enclose accommodation space.

When the hinge is unfolded, the first swing connecting rod and the second swing connecting rod rotate away from each other, the first swing connecting rod drives the first driven arm to rotate synchronously, the first swing connecting rod and the first swing arm contract and move relative to the first driven arm, the second swing connecting rod drives the second driven arm to rotate synchronously, and the second swing connecting rod and the second swing arm contract and move relative to the second driven arm, to reduce the length of the hinge; and the first swing arm or the first driven arm that is slidably connected to the first support plate drives the first support plate to rotate forward relative to the first swing connecting rod (for example, when the first swing connecting rod rotates counterclockwise, the first support plate rotates counterclockwise relative to the first swing connecting rod), and the second swing arm or the second driven arm that is slidably connected to the second support plate drives the second support plate to rotate forward relative to the second swing connecting rod (for example, when the second swing connecting rod rotates clockwise, the second support plate rotates clockwise relative to the second swing connecting rod), so that the first support plate, the second support plate, and the main body are flattened into a support surface. Therefore, the flexible display can be well supported.

According to the hinge provided in this embodiment of this application, when the hinge is folded, the length of the hinge can be well increased, and the first support plate, the main body, and the second support plate can gradually enclose the accommodation space; and when the hinge is unfolded, the length of the hinge can be well reduced, and the first support plate, the main body, and the second support plate can be gradually flattened into the support surface. In addition, in this process, there is no obvious gap in the hinge from a perspective of an appearance, so that the hinge is well shielded, to help improve integrity and security of the hinge. The holding plate may be further fixedly connected to the first support plate and the second support plate. In a specific implementation, the first connecting part of the holding plate may be bonded to the first support plate, and the second connecting part of the holding plate may be bonded to the second support plate. In a process of folding and unfolding the hinge, the first support plate and the second support plate may have a posture change such as rotation or sliding along with a folded state of the hinge. Correspondingly, the first connecting part may also have a corresponding posture change along with the first support plate, and the second connecting part may also have a corresponding posture change along with the second support plate. In this way, the first support plate and the second support plate can effectively control a form of the holding plate (or the flexible display). This helps improve a use effect and stability of the foldable device.

### BRIEF DESCRIPTION OF DRAWINGS

FIG. 1 is a schematic diagram of a cross-sectional structure of a foldable device according to an embodiment of this application;
FIG. 2 is a schematic diagram of a structure in which a flexible display is in an unfolded state according to an embodiment of this application;
FIG. 3 is a schematic diagram of a partial cross-sectional structure in which a flexible display is in a folded state according to an embodiment of this application;
FIG. 4 is a schematic diagram of a structure of a holding plate according to an embodiment of this application;
FIG. 5 is a schematic diagram of a structure of a foldable device according to an embodiment of this application;
FIG. 6 is a schematic diagram of a structure of a hinge according to an embodiment of this application;
FIG. 7 is a schematic diagram of a partial structure of a hinge according to an embodiment of this application;
FIG. 8 is a schematic diagram of a partial structure of a hinge according to an embodiment of this application;
FIG. 9 is a schematic diagram of a partial cross-sectional structure in which a foldable device is in a folded state according to an embodiment of this application;
FIG. 10 is a schematic diagram of a cross-sectional structure of a hinge according to an embodiment of this application;
FIG. 11 is a schematic diagram of a partial structure of a hinge according to an embodiment of this application;
FIG. 12 is a schematic diagram of a partial structure of a hinge according to an embodiment of this application; and
FIG. 13 is a schematic diagram of a partial structure of a hinge according to an embodiment of this application.

### DESCRIPTION OF EMBODIMENTS

To make objectives, technical solutions, and advantages of this application clearer, the following further describes this application in detail with reference to the accompanying drawings.

To facilitate understanding of a flexible display provided in embodiments of this application, the following first describes an application scenario of the flexible display.

The flexible display provided in embodiments of this application may be applied to a foldable device such as a foldable mobile phone, a foldable tablet computer, a notebook computer, or a foldable ebook. A flexible display has a specific bendability. Therefore, the flexible display may be folded in some cases, and the flexible display may be unfolded in other cases. For example, after the foldable device is folded, the flexible display may be folded accordingly, so that an area of the foldable device can be reduced, to improve portability; or after the foldable device is unfolded, the flexible display may be unfolded accordingly, so that a large display area can be provided, to improve use convenience for a user.

In some foldable devices, a posture of a folded part in a flexible display after the foldable device is folded is not considered. In addition, no corresponding structure is disposed to effectively control a folding posture of the flexible display. Consequently, the folded part in the flexible display forms a large bulge, and a thickness of the foldable device and an overall posture of the foldable device after being folded are affected.

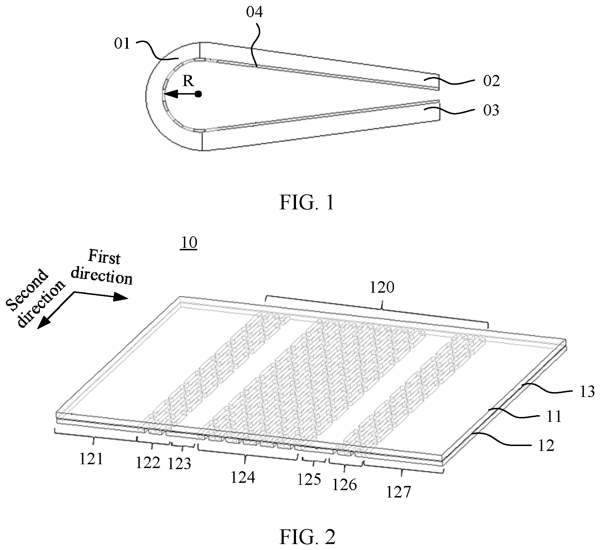

Specifically, as shown in FIG. 1, the foldable device may include a first body 02 and a second body 03 that are connected by using a hinge 01. The first body 02 and the second body 03 may be folded opposite to each other by using the hinge 01, to implement a folding function of the foldable device. One part of a flexible display 04 is fixedly connected to the first body 02, and the other part of the flexible display 04 is fixedly connected to the second body 03. The flexible display 04 has a specific flexibility. Therefore, when the first body 02 and the second body 03 are folded by using the hinge 01, a part that is of the flexible display 04 and that corresponds to the hinge 01 can be bent and deformed. In actual application, to ensure security of the flexible display 04, a bending radius R of a folded part (that is, the part that is bent and deformed) of the flexible display 04 needs to be greater than a specific value, to avoid an undesirable phenomenon such as creases or a crack. Therefore, after the foldable device is folded, a part of the hinge 01 (or the folded part of the flexible display 04) forms a large arch-shaped bulge. This affects a thickness of the foldable device. In addition, a specific angle is also maintained between the first body 02 and the second body 03, and the first body 02 and the second body 03 cannot be parallel to each other. This impacts on security of the foldable device. For example, after the foldable device is squeezed by an external force, the hinge 01 bears a large acting force, and is prone to risks such as deformation and a malfunction. In addition, a foreign matter is prone to remain in a gap between the first body 02 and the second body 03. This impacts on security of the flexible display 04.

Therefore, an embodiment of this application provides a flexible display whose folding posture can be effectively controlled and a foldable device to which the flexible display is applied.

To facilitate understanding of the technical solutions of this application, a flexible display provided in this application is specifically described below with reference to the accompanying drawings and specific implementations.

The terms used in the following embodiments are merely intended to describe specific embodiments, but are not intended to limit this application. Terms "one", "a", "the foregoing", "this", and "the one" of singular forms used in this specification and the appended claims of this application are also intended to include a form like "one or more", unless otherwise specified in the context clearly. It should be further understood that in the following embodiments of this application, "at least one" and "one or more" refer to one, two, or more. The term "and/or" is used to describe an association relationship between associated objects, and indicates that there may be three relationships. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. Terms "include", "contain", "have", and their variants all mean "include but are not limited to", unless otherwise specifically emphasized.

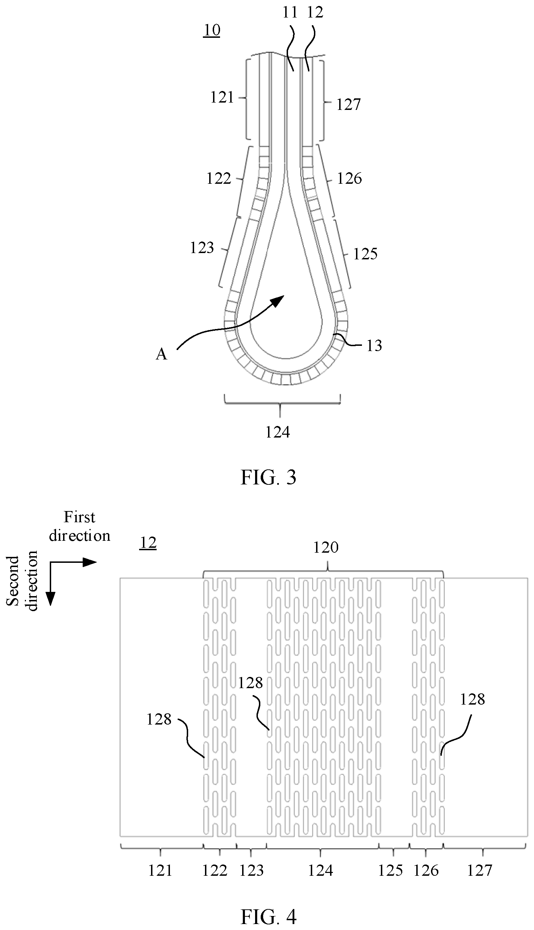

As shown in FIG. 2, in an embodiment provided in this application, a flexible display 10 includes a flexible display panel 11 (for example, an OLED display panel) and a holding plate 12. An upper surface of the flexible display panel 11 is a display surface that is configured to display an image, and a lower surface is a back surface. The holding plate 12 is disposed on the back surface of the flexible display panel 11 by using a bonding layer 13, and is configured to provide support for the flexible display panel 11. In addition, to effectively control a folding posture of the flexible display 10, the holding plate 12 is provided with a first fixed part 121, a first bending part 122, a first connecting part 123, a main bending part 124, a second connecting part 125, a second bending part 126, and a second fixed part 127 that are sequentially disposed in a first direction (a direction from left to right in the figure). The first direction is parallel to a plate surface of the holding plate 12. As shown in FIG. 3, after the flexible display 10 is folded, the main bending part 124 may be bent toward a folding direction (which may also be understood as being bent inwards), and the first bending part 122 and the second bending part 126 may be bent away from the folding direction (which may also be understood as being bent outwards), so that the folding form of the flexible display 10 can be effectively controlled. Under action of the holding plate 12, after the flexible display 10 is unfolded, flatness of the flexible display panel 11 can be improved, so that a display effect of the flexible display panel 11 is effectively improved. After the flexible display 10 is folded, the holding plate 12 can control the folding posture of the flexible display 10 based on settings of a structure of the holding plate 12, to improve user experience.

Specifically, as shown in FIG. 2, the holding plate 12 may be a plate structure with a specific rigidity, such as a metal plate, a glass plate, or a plastic plate. In the holding plate 12, the first bending part 122, the first connecting part 123, the main bending part 124, the second connecting part 125, and the second bending part 126 jointly form a bent part 120 of the flexible display 10. The first fixed part 121, the first connecting part 123, the second connecting part 125, and the second fixed part 127 are more rigid, and the first bending part 122, the main bending part 124, and the second bending part 126 are more flexible. As shown in FIG. 3, after the flexible display 10 is folded, the first fixed part 121, the first connecting part 123, the second connecting part 125, and the second fixed part 127 that are more rigid are not easily bent, so that a flat plate structure can be maintained. In addition, the first bending part 122, the main bending part 124, and the second bending part 126 that are more flexible are easily bent. In addition, because the main bending part 124 can be bent toward the folding direction, and the first bending part 122 and the second bending part 126 can be bent away from the folding direction, a size of a contour A enclosed by the bent part of the flexible display 10 is reduced.

In a specific implementation, after the flexible display 10 is unfolded, a flat plate-like structure may be formed. To be specific, the surface that is of the flexible display panel 11 and that is configured to display the image may have high flatness, to provide a good display effect and good visual experience. In addition, after the flexible display 10 is folded, the first fixed part 121 and the second fixed part 127 may be parallel to each other, to reduce a volume occupied by the flexible display 10 as much as possible. In addition, the size of the contour A enclosed by the flexible display 10 can be effectively reduced, to further improve security of the flexible display 10.

In addition, to enable the first bending part 122, the main bending part 124, and the second bending part 126 to be more flexible than the first fixed part 121, the first connecting part 123, the second connecting part 125, and the second fixed part 127,
in an implementation, thicknesses of the first fixed part 121, the first connecting part 123, the second connecting part 125, and the second fixed part 127 may be greater than thicknesses of the first bending part 122, the main bending part 124, and the second bending part 126. Specifically, when a thickness of the holding plate 12 is uneven, an area with a smaller thickness is more easily bent, and correspondingly, an area with a larger thickness is more difficult to be bent. Therefore, based on the settings of the foregoing structures, when the holding plate 12 (or the flexible display 10) is folded, the first bending part 122, the main bending part 124, and the second bending part 126 that have smaller thicknesses are more easily bent. Therefore, the folding form of the flexible display 10 can be effectively controlled. During specific configuration, the thicknesses of the first fixed part 121, the first connecting part 123, the second connecting part 125, and the second fixed part 127 may be the same or different. In addition, the thicknesses of the first bending part 122, the main bending part 124, and the second bending part 126 may be the same or different. This is not specifically limited in this application.

In addition, in another implementation, material densities of the first fixed part 121, the first connecting part 123, the second connecting part 125, and the second fixed part 127 may be greater than material densities of the first bending part 122, the main bending part 124, and the second bending part 126. Specifically, when the entire holding plate 12 is made of a same material, and weights of materials per unit volume are different in different areas, an area in which a weight of a material per unit volume is lighter (that is, a material density is lower) is more easily bent, and correspondingly, an area in which a weight of a material per unit volume is heavier (that is, a material density is higher) is more difficult to be bent. Therefore, according to the foregoing structure setting, when the holding plate 12 (or the flexible display 10) is folded, the first bending part 122, the main bending part 124, and the second bending part 126 that have lower material densities are more easily bent. Therefore, the folding form of the flexible display 10 can be effectively controlled. During specific configuration, the material densities of the first fixed part 121, the first connecting part 123, the second connecting part 125, and the second fixed part 127 may be the same or different. In addition, the material densities of the first bending part 122, the main bending part 124, and the second bending part 126 may be the same or different. This is not specifically limited in this application.

In addition, as shown in FIG. 4, in another implementation, through holes 128 may be disposed in the first bending part 122, the main bending part 124, and the second bending part 126. The first bending part 122 is used as an example. After a through hole 128 that penetrates upper and lower plate surfaces of the holding plate 12 is disposed in the first bending part 122, rigidity of the area is reduced. When the holding plate 12 is bent, bending and deformation more easily occur in the area in which the through holes 128 are disposed. Correspondingly, through holes 128 are disposed in the main bending part 124 and the second bending part 126. This can also reduce rigidity of the areas in which the through holes 128 are disposed. Therefore, based on the settings of the foregoing structures, when the holding plate 12 (or the flexible display 10) is folded, the first bending part 122, the main bending part 124, and the second bending part 126 in which the through holes 128 are disposed are more easily bent. Therefore, the folding form of the flexible display 10 can be effectively controlled. During specific configuration, parameters such as sizes, cross-sectional contours, quantities, and location arrangements of the through holes 128 disposed in the first bending part 122, the main bending part 124, and the second bending part 126 may be the same or different.

The first bending part 122 is used as an example. To enable the first bending part 122 to be more easily bent, a plurality of through holes are disposed in the first bending part 122, and in a second direction (a direction from top to bottom in the figure), the plurality of through holes 128 are arranged from one edge (an upper edge in the figure) of the holding plate 12 to the other edge (a lower edge in the figure). In addition, to enable the first bending part 122 to have a bending area with a specific size, a plurality of columns of through holes 128 are disposed in a first direction (a direction from left to right in the figure). During specific configuration, two adjacent columns of through holes 128 may be disposed in a staggered manner, to ensure force-bearing performance and fatigue resistance of the first bending part 122. Correspondingly, in the main bending part 124 and the second bending part 126, location arrangements of through holes 128 may also be arranged according to the location arrangement of the through holes 128 in the first bending part 122. In addition, considering that a bending angle of the main bending part 124 may be larger in actual application, an area of the main bending part 124 may be larger than areas of the first bending part 122 and the second bending part 126. Specifically, more columns (13 columns are shown in the figure) of through holes 128 may be disposed in the main bending part 124, fewer columns (four columns are shown in the figure) of through holes 128 may be disposed in the first bending part 122, and fewer columns (four columns are shown in the figure) of through holes 128 may also be disposed in the second bending part 126. A quantity of columns of through holes 128 disposed in the first bending part 122 may be the same as or different from a quantity of columns of through holes 128 disposed in the second bending part 126. In addition, the first connecting part 123 and the second connecting part 125 may be symmetrically disposed or asymmetrically disposed with respective to the main bending part 124. Alternatively, it may be understood that, in the first direction, a length of the first connecting part 123 may be the same as or different from a length of the second connecting part 125. Correspondingly, the first bending part 122 and the second bending part 126 may be symmetrically disposed or asymmetrically disposed with respective to the main bending part 124. Alternatively, it may be understood that, in the first direction, a quantity of columns of through holes 128 disposed in the first bending part 122 may be the same as or different from a quantity of columns of through holes 128 disposed in the second bending part 126. Correspondingly, the first fixed part 121 and the second fixed part 127 may be symmetrically disposed or asymmetrically disposed with respective to the main bending part 124. Alternatively, it may be understood that, in the first direction, a length of the first fixed part 121 may be the same as or different from a length of the second fixed part 127.

In addition, in a specific implementation, a cross-sectional profile of the through hole 128 may be a circle, an ellipse, or another shape. For example, in embodiments provided in this application, the cross-sectional profile of the through hole 128 is long-strip-shaped. In addition, to improve bendability of the first bending part 122, the main bending part 124, and the second bending part 126, a length direction of the cross-sectional profile of the through hole 128 is parallel to the second direction (or perpendicular to the first direction).

During specific configuration, as shown in FIG. 3, the holding plate 12 may be attached to the back of the flexible display panel 11 by using the bonding layer 13. The bonding layer 13 may be specifically double-sided tape, or may be an adhesive layer including a material such as polyurethane, polyethylene, or polypropylene. In a specific implementation, a shape profile and a size of the holding plate 12 may be respectively the same as or different from a shape profile and a size of the flexible display panel 11. For example, in an embodiment provided in this application, the holding plate 12 and the flexible display panel 11 are rectangular structures of a same size. One plate surface of the holding plate 12 is completely attached to the back of the flexible display panel 11, to improve strength of a connection between the holding plate 12 and the flexible display panel 11 and consistency of bending and deforming the holding plate 12 and the flexible display panel 11.

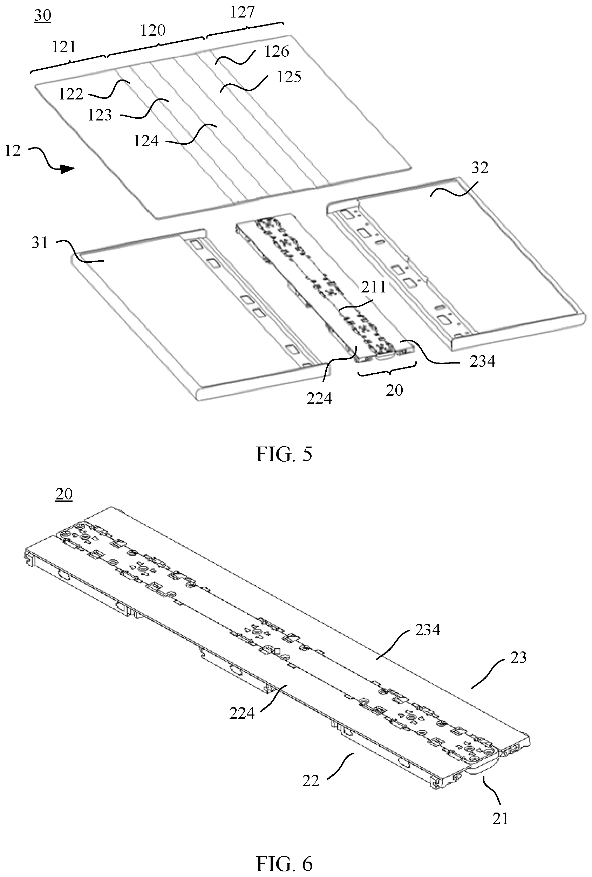

In addition, as shown in FIG. 5, an embodiment of this application further provides a foldable device 30, including a first housing 31, a second housing 32, a hinge 20, and the foregoing flexible display (only a structure of the holding plate 12 is shown for the flexible display in the figure). The first housing 31 and the second housing 32 are connected through the hinge 20, to implement a folding function of the foldable device 30. The first fixed part 121 of the holding plate 12 is fixedly connected to the first housing 31, and the second fixed part 127 is fixedly connected to the second housing 32. When the first housing 31 and the second housing 32 are folded or unfolded relative to each other, the holding plate 12 (or the flexible display) can also be folded or unfolded accordingly.

In a specific implementation, that the first fixed part 121 of the holding plate 12 is fixedly connected to the first housing 31 may be specifically that the first fixed part 121 may be fixedly attached to the first housing 31 by using a bonding material (such as double-sided tape, polyurethane, polyethylene, or polypropylene). That the second fixed part 127 of the holding plate 12 is fixedly connected to the second housing 32 may be specifically that the second fixed part 127 may be fixedly attached to the second housing 32 by using a bonding material (such as double-sided tape, polyurethane, polyethylene, or polypropylene). In some other implementations, the first fixed part 121 may also be fixedly connected to the first housing 31 through welding or the like, and the second fixed part 127 may also be fixedly connected to the second housing 32 through welding or the like. This is not specifically limited in this application.

In a specific implementation, the hinge 20 may be in various structures and bending forms. Alternatively, the flexible display may be fixedly connected to some structures in the hinge 20.

For example, as shown in FIG. 6, an embodiment of this application provides a hinge 20 (for a specific structure and a motion principle of the hinge 20, refer to a patent document with Chinese Application NO. 201911286336.8 and entitled "HINGE AND MOBILE TERMINAL". Therefore, only brief descriptions are provided below). In summary, the hinge 20 includes a main body 21 and a first foldable assembly 22 and a second foldable assembly 23 that are symmetrically disposed with respect to the main body 21. The first foldable assembly 22 and the second foldable assembly 23 can rotate toward each other in opposite directions or away from each other relative to the main body 21, to implement a folding function of the hinge 20.

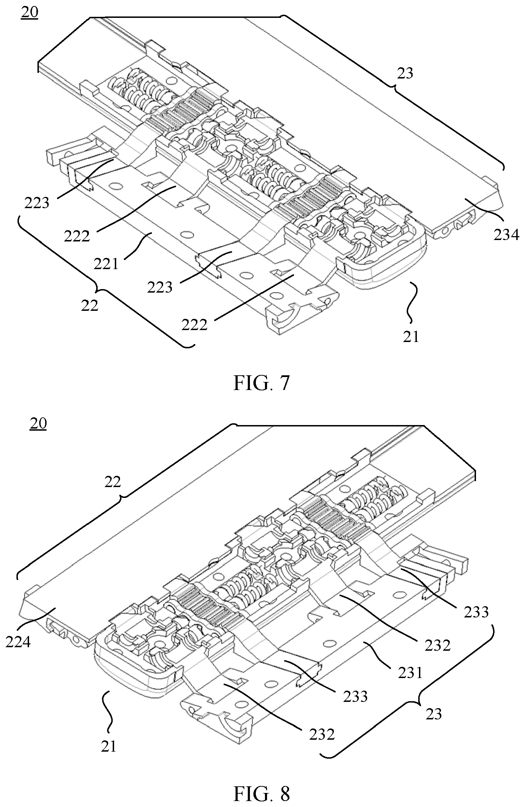

As shown in FIG. 7, the first foldable assembly 22 may include a first swing connecting rod 221, first swing arms 222 (two first swing arms 222 are shown in the figure), first driven arms 223 (two first driven arms 223 are shown in the figure), and a first support plate 224 (not shown in FIG. 7). One end (a right end in the figure) of the first swing arm 222 is rotatably connected to the main body 21, and the other end (a left end in the figure) of the first swing arm 222 is rotatably connected to the first swing connecting rod 221. One end (a right end in the figure) of the first driven arm 223 is rotatably connected to the main body 21, and the other end (a left end in the figure) of the first driven arm 223 is slidably connected to the first swing connecting rod 221. Rotation axis centers of the first driven arm 223 and the first swing arm 222 on the main body 21 are parallel to each other and do not coincide, so that a length of the first foldable assembly 22 can change when the first foldable assembly 22 rotates relative to the main body 21.

The first support plate 224 is rotatably connected to the first swing connecting rod 221, and is slidably connected to the first driven arm 223. When the first foldable assembly 22 rotates relative to the main body 21, the first support plate 224 can rotate relative to the first swing connecting rod 221 under driving force of the first driven arm 223.

As shown in FIG. 8, the second foldable assembly 23 may include a second swing connecting rod 231, second swing arms 232 (two second swing arms 232 are shown in the figure), second driven arms 233 (two second driven arms 233 are shown in the figure), and a second support plate 234 (not shown in FIG. 8). One end (a left end in the figure) of the second swing arm 232 is rotatably connected to the main body 21, and the other end (a right end in the figure) of the second swing arm 232 is rotatably connected to the second swing connecting rod 231. One end (a left end in the figure) of the second driven arm 233 is rotatably connected to the main body 21, and the other end (a right end in the figure) of the second driven arm 233 is slidably connected to the second swing connecting rod 231. Rotation axis centers of the second driven arm 233 and the second swing arm 232 on the main body 21 are parallel to each other and do not coincide, so that a length of the second foldable assembly 23 can change when the second foldable assembly 23 rotates relative to the main body 21.

The second support plate 234 is rotatably connected to the second swing connecting rod 131, and is slidably connected to the second driven arm 233. When the second foldable assembly 23 rotates relative to the main body 21, the second support plate 234 can rotate relative to the second swing connecting rod 231 under driving force of the second driven arm 233.

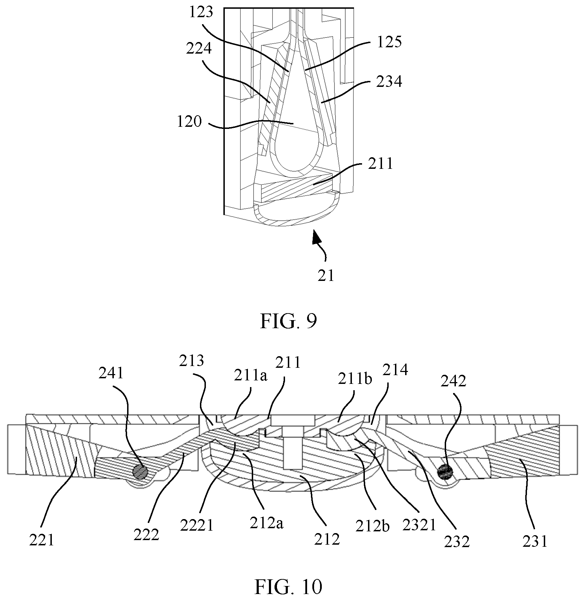

Refer to FIG. 9. In a process of folding the hinge 20, because the first swing connecting rod 121 slides outward relative to the first driven arm 123, the first driven arm 123 drives the first support plate 124 to rotate clockwise relative to the first swing connecting rod 121, so that accommodation space used to accommodate (a bent part of) the flexible display is gradually formed between the first support plate 124 and the main body 21.

It may be understood that the first foldable assembly 22 and the second foldable assembly 23 may be symmetrically disposed with respect to the main body 21, and basic structural composition and a motion principle of the second foldable assembly 23 may be the same as those of the first foldable assembly 22. Therefore, for the structural composition and the motion principle of the second foldable assembly 23, refer to the foregoing description of the first foldable assembly 22. Details are not described herein again.

Structures of connections between the components of the first foldable assembly 22 and structures of connections between the main body 21 and the components of the first foldable assembly 22 are described in detail below. For structures of connections between the components of the second foldable assembly 23, refer to the descriptions of the first foldable assembly 22.

As shown in FIG. 10, in an embodiment provided in this application, a specific manner in which the first swing arm 222 and the main body 21 are rotatably connected to each other may be a virtual shaft manner.

Specifically, the main body 21 may include a housing 212 and an inner housing 211 that are mutually snap-fitted. An arc recess 212a may be disposed in the housing 212, and an arc protrusion 211a may be disposed in the inner housing 211. After the housing 212 and the inner housing 211 are snap-fitted and fastened, the arc recess 212a and the arc protrusion 211a are snap-fitted to form a first arc groove 213. This may also mean that an arc gap is formed between the arc recess 212a and the arc protrusion 211a. A first arc shaft 2221 is disposed at one end of the first swing arm 222, and the first arc shaft 2221 is assembled in the first arc groove 213, so that the first swing arm 222 and the main body 21 are rotatably connected to each other. In the virtual shaft connection manner, a structure of a connection between the first swing arm 222 and the main body 21 can be well hidden in the main body 21. This helps improve integrity and use experience of the hinge 20.

In a specific implementation, the first arc groove 213 may be a quarter of a circle, one third of a circle, or the like, and the first arc shaft 2221 may be a quarter of a circle, one third of a circle, or the like. A person skilled in the art may adaptively adjust specific parameters of the first arc groove 213 and the first arc shaft 2221 based on an actual requirement. This is not specifically limited in this application.

A specific manner in which the second swing arm 232 and the main body 21 are rotatably connected to each other may also be a virtual shaft manner. Specifically, an arc recess 212b may be disposed in the housing 212, and an arc protrusion 211b may be disposed in the inner housing 211. After the housing 212 and the inner housing 211 are snap-fitted and fastened, the arc recess 212b and the arc protrusion 211b are snap-fitted to form a second arc groove 214. This may also mean that an arc gap is formed between the arc recess 212b and the arc protrusion 211b. A second arc shaft 2321 is disposed at one end of the second swing arm 232, and the second arc shaft 2321 is assembled in the second arc groove 214, so that the second swing arm 232 and the main body 21 are rotatably connected to each other. In the virtual shaft connection manner, a structure of a connection between the second swing arm 232 and the main body 21 can be well hidden in the main body 21. This helps improve integrity and use experience of the hinge 20.

In addition, in some implementations, the first swing arm 222 and the main body 21 are alternatively rotatably connected to each other in a pin shaft manner or another manner.

For example, in an embodiment provided in this application, a specific manner in which the first swing arm 222 and the first swing connecting rod 121 are rotatably connected to each other may be a pin shaft manner.

Specifically, a first shaft hole (not shown in the figure) is disposed at one end (a left end in the figure) of the first swing arm 222, and a second shaft hole (not shown in the figure) is disposed at one end (a right end in the figure) of the first swing connecting rod 221. A pin shaft 241 penetrates into the first shaft hole and the second shaft hole, so that the first swing arm 222 and the first swing connecting rod 221 are rotatably connected to each other.

A specific manner in which the second swing arm 232 and the second swing connecting rod 231 are rotatably connected to each other may be a pin shaft manner.

Specifically, a third shaft hole (not shown in the figure) may be disposed at one end (a right end in the figure) of the second swing arm 232, and a fourth shaft hole (not shown in the figure) may be disposed at one end (a left end in the figure) of the second swing connecting rod 231. A pin shaft 242 penetrates into the third shaft hole and the fourth shaft hole, so that the second swing arm 232 and the second swing connecting rod 231 are rotatably connected to each other.

In some implementations, the first swing arm 222 and the first swing connecting rod 221 are alternatively rotatably connected to each other in the foregoing virtual shaft connection manner or another manner. The second swing arm 232 and the second swing connecting rod 231 are alternatively rotatably connected to each other in the foregoing virtual shaft connection manner or another manner. This is not specifically limited in this application.

In a specific implementation, the first driven arm 223 and the main body 21 are rotatably connected to each other in the foregoing virtual shaft connection manner, the foregoing pin shaft connection manner, or another manner.

For example, as shown in FIG. 7, in an embodiment provided in this application, the first driven arm 223 and the main body 21 are rotatably connected to each other in a pin shaft connection manner. Specifically, a shaft hole (not shown in the figure) is disposed at one end (a right end in the figure) of the first driven arm 223, and a pin shaft 243 fastened in the main body 21 penetrates into the shaft hole of the first driven arm 223, so that the first driven arm 223 and the main body 21 are rotatably connected to each other.

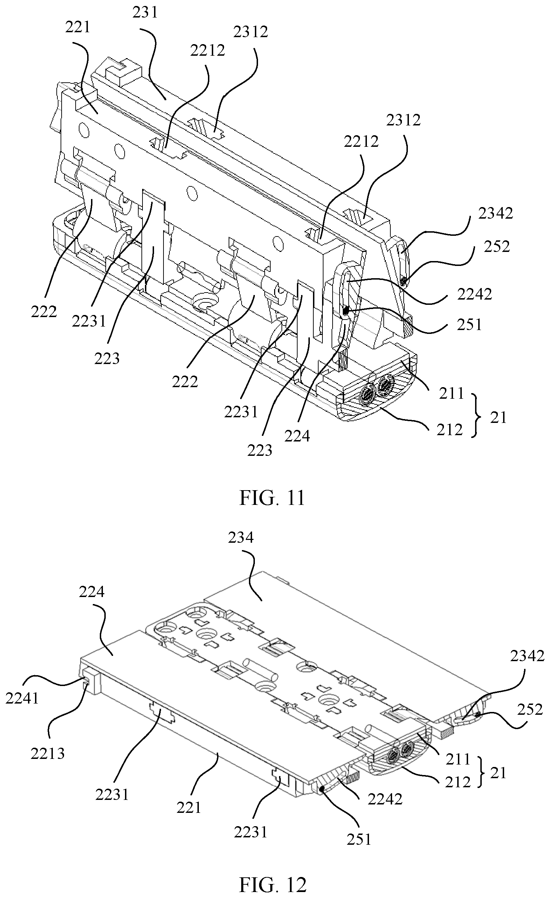

In addition, as shown in FIG. 11 and FIG. 12, in an embodiment provided in this application, a first sliding groove 2212 may be disposed on the first swing connecting rod 221, a first sliding rail 2231 may be disposed on the first driven arm 223, and the first sliding rail 2231 is slidably disposed in the first sliding groove 2212, so that the first driven arm 223 and the first swing connecting rod 221 are slidably connected to each other.

In a specific implementation, the first sliding groove 2212 may alternatively be disposed on the first driven arm 223, and the first sliding rail 2231 may alternatively be disposed on the first swing connecting rod 221. In addition, the first sliding groove 2212 and the first sliding rail 2231 may be in various shapes. For example, in this embodiment provided in this application, cross sections of the first sliding groove 2212 and the first sliding rail 2231 are cross-shaped. In another implementation, shapes of the cross sections of the first sliding groove 2212 and the first sliding rail 2231 may alternatively be trapezoidal, triangular, or the like. Details are not described herein in this application.

In addition, in an embodiment provided in this application, a second sliding groove 2312 may be disposed on the second swing connecting rod 231, a second sliding rail (not shown in the figure) may be disposed on the second driven arm (not shown in the figure), and the second sliding rail is slidably disposed in the second sliding groove 2312, so that the second driven arm and the second swing connecting rod 231 are slidably connected to each other.

In a specific implementation, the second sliding groove 2312 may alternatively be disposed on the second driven arm, and the second sliding rail may alternatively be disposed on the second swing connecting rod 231. In addition, the second sliding groove 2312 and the second sliding rail may be in various shapes. For example, in this embodiment provided in this application, cross sections of the second sliding groove 2312 and the second sliding rail are cross-shaped. In another implementation, shapes of the cross-sections of the second sliding groove 2312 and the second sliding rail may alternatively be trapezoidal, triangular, or the like. Details are not described herein in this application.

In addition, in a specific implementation, the first support plate 224 and the first swing connecting rod 221 are alternatively rotatably connected to each other in the foregoing virtual shaft connection manner, the pin shaft connection manner, or another connection manner.

For example, as shown in FIG. 12, in an embodiment provided in this application, the first support plate 224 and the first swing connecting rod 221 are rotatably connected to each other in a virtual shaft connection manner. Specifically, a third arc groove 2213 is disposed on the first swing connecting rod 221, a third arc shaft 2241 that fits the third arc groove 2213 is disposed on the first support plate 224, and the third arc shaft 2241 is disposed in the third arc groove 2213, so that the first support plate 224 and the first swing connecting rod 221 are rotatably connected to each other.

In the virtual shaft connection manner, the third arc groove 2213 and the third arc shaft 2241 can be well hidden to prevent exposure, so that visual integrity of the hinge 20 can be improved.

In some implementations, the first support plate 224 and the first swing connecting rod 221 are alternatively rotatably connected to each other in a pin shaft connection manner or another connection manner. This is not specifically limited in this application.

In a specific implementation, the second support plate 234 and the second swing connecting rod 231 are alternatively rotatably connected to each other in the foregoing virtual shaft connection manner. Specifically, a same structure as that of the third arc groove 2213 may be disposed on the second swing connecting rod 231, and a same structure as that of the third arc shaft 2241 may also be disposed on the second support plate 234, so that the second support plate 234 and the second swing connecting rod 231 are rotatably connected to each other.

In a process of folding the hinge 20, to enable the first support plate 224 to rotate relative to the first swing connecting rod 221, in an embodiment provided in this application, the first support plate 224 is slidably connected to the first driven arm 223.

Specifically, as shown in FIG. 12, a third sliding groove 2242 is disposed on the first support plate 224, a positioning shaft 251 is disposed on the first driven arm 223, and the positioning shaft 251 is slidably disposed in the third sliding groove 2242. When the first driven arm 223 and the first swing connecting rod 221 slide relative to each other, the positioning shaft 251 on the first driven arm 223 abuts against a side wall of the third sliding groove 2242, so that the first support plate 224 rotates around the first swing connecting rod 221.

In a specific implementation, the third sliding groove 2242 may be an arc groove, a linear groove, an irregular curved groove, or the like. In actual application, a shape of the third sliding groove 2242 may be adjusted based on a target moving track of the first support plate 224.

For example, with reference to FIG. 11, in an embodiment provided in this application, after the hinge 20 is folded, to enable the first support plate 224, the second support plate 234, and the main body 21 (the inner housing 211) to enclose accommodation space, the first support plate 224 is rotatably connected to a left end of the first swing connecting rod 221 (the third arc groove 2213 is disposed close to the left end of the first swing connecting rod 221). When the hinge 20 is folded, the first swing connecting rod 221 rotates clockwise and slides outward along the first driven arm 223. In addition, the positioning shaft 241 abuts against the side wall of the third sliding groove 2242 and slides in the third sliding groove 2242, so that the first support plate 224 rotates clockwise relative to the first swing connecting rod 221. In this way, accommodation space is gradually formed between the first support plate 224 and the main body 21 (the inner housing 211). In addition, when the hinge 20 is unfolded, the first swing connecting rod 221 rotates counterclockwise and slides inward along the first driven arm 223. In addition, the positioning shaft 241 abuts against the side wall of the third sliding groove 2242 and slides in the third sliding groove 2242, so that the first support plate 224 rotates counterclockwise relative to the first swing connecting rod 221. When the hinge 20 is fully unfolded, an upper surface of the first support plate 224 is flush with an upper surface of the main body 21 (the inner housing 211), so that a flat support surface can be provided for the flexible display.

As shown in FIG. 12, in a specific implementation, structural composition of the second foldable assembly 23 may be the same as structural composition of the first foldable assembly 22, and the second foldable assembly 23 and the first foldable assembly 22 are symmetrically disposed with respect to the main body 21. Specifically, a fourth sliding groove 2342 may be disposed on the second support plate 234, a positioning shaft 252 may be disposed on the second driven arm 233, and the positioning shaft 252 is slidably disposed in the fourth sliding groove 2342. When the second driven arm 233 and the second swing connecting rod 231 slide relative to each other, the positioning shaft 252 on the second driven arm 233 abuts against a side wall of the fourth sliding groove 2342, so that the second support plate 234 rotates around the second swing connecting rod 231. For a motion principle of the second foldable assembly 23, refer to the foregoing descriptions of the first foldable assembly 22. Details are not described herein again.

In addition, to ensure that the first foldable assembly 22 and the second foldable assembly 23 can synchronously move in a process of folding and unfolding the hinge 20, in an embodiment provided in this application, the hinge 20 may further include a synchronization assembly, to implement synchronous reverse rotation (synchronous opposite rotation and synchronous away rotation) between the first foldable assembly 22 and the second foldable assembly 23.

In a specific implementation, the synchronization assembly may be in various structure forms and have various connection relationships with the first foldable assembly 22 and the second foldable assembly 23.

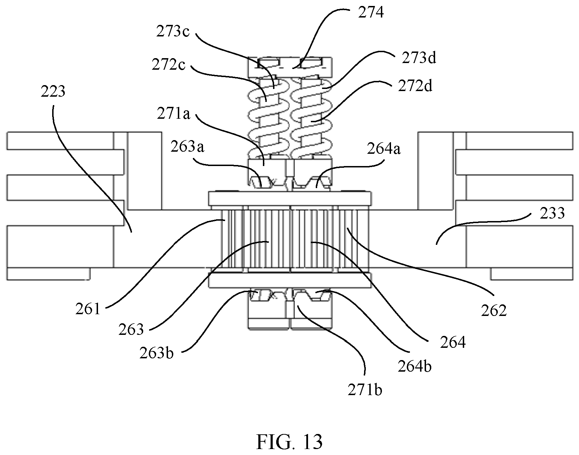

For example, as shown in FIG. 13, in an embodiment provided in this application, the synchronization assembly may include a gear structure, and is rotatably connected to the first driven arm 223 and the second driven arm 233.

Specifically, the synchronization assembly includes a first gear 261 and a second gear 262 engaged with each other. The first gear 261 is fastened to one end of the first driven arm 223 (in some implementations, a gear structure may alternatively be directly formed at a right end of the first driven arm 223), and the second gear 262 is fastened to one end of the second driven arm 233 (in some implementations, a gear structure may alternatively be directly formed at a left end of the second driven arm 233). An axis center of the first gear 261 coincides with a rotation axis center of the first driven arm 223 on the main body 21, and an axis center of the second gear 262 coincides with a rotation axis center of the second driven arm 233 on the main body 21. A driven gear 263 and a driven gear 264 that are engaged with each other are disposed between the first gear 261 and the second gear 262. The driven gear 263 is engaged with the first gear 261, and the driven gear 164 is engaged with the second gear 162. In other words, the first driven arm 223 and the second driven arm 233 synchronously rotate by using the first gear 261, the second gear 262, the driven gear 263, and the driven gear 264.

As shown in FIG. 5, in a specific implementation, the first fixed part 121 of the holding plate 12 may be bonded to the first housing 21, and the second fixed part 127 of the holding plate 12 may be bonded to the second housing 22. In a process of folding and unfolding the hinge 20, a length of the hinge 20 may be increased or reduced as a folding angle changes. Therefore, in the process of folding and unfolding the foldable device 30, a length of a connection between the first housing 21, the hinge 20, and the second housing 22 is increased or reduced, so that no pressing force or stretching force is applied to the holding plate 12 (or the flexible display). Specifically, when the foldable device 30 is gradually unfolded, a length of the hinge 20 is gradually reduced. After the foldable device 30 is fully unfolded (an included angle between the first housing 21 and the second housing 22 is 180°), the length of the hinge 20 is the same as a length of the bent part 120 in the holding plate 12. In addition, the first support plate 224, the inner housing 211, and the second support plate 234 form a flat support surface, so that the holding plate 12 (or the flexible display) can be well supported.

As shown in FIG. 9, after the foldable device 30 is gradually folded, a length of the hinge 20 is gradually increased, to ensure that no compression force is applied to the bending part 120 in the holding plate 12. In addition, the first support plate 224, the inner housing 211, and the second support plate 234 gradually enclose accommodation space (a shape of a cross section of the accommodation space may be similar to a water drop shape) used to accommodate the bent part 120, to prevent the bent part 120 from being bent at a large angle, to avoid an undesirable phenomenon such as creases.

In some implementations, the holding plate 12 may be further fixedly connected to the first support plate 224 and the second support plate 234. In a specific implementation, the first connecting part 123 of the holding plate 12 may be bonded to the first support plate 224, and the second connecting part 125 of the holding plate 12 may be bonded to the second support plate 234. In a process of folding and unfolding the hinge 20, the first support plate 224 and the second support plate 234 do not have adverse impact, such as stretching and compression, on the bent part 120, and can further effectively control a form of the holding plate 12 (or the flexible display). This helps improve a use effect and stability of the foldable device 30.

It may be understood that when another type of hinge is used for the foldable device 30, the flexible display 10 provided in this application can still well fit the foldable device 30.

The descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable electronic device, comprising:
a first housing (31), a second housing (32), and a hinge (20), wherein the first housing (31) and the second housing (32) are connected through the hinge (20); and
a holding plate, wherein the holding plate comprise a first fixed part (121), a first bending part (122), a first connecting part (123), a main bending part (124), a second connecting part (125), a second bending part (126), and a second fixed part (127) that are sequentially disposed along a first direction, wherein the first direction is a direction from the first fixed part (121) to the second fixing part (127) when the holding plate (12) is flattened, and wherein the first connecting part (123) is more rigid than the first bending part (122) and the main bending part (124), and the second connecting part (125) is more rigid than the main bending part (124) and the second bending part (126), and wherein through holes are disposed in the main bending part, the first fixed part (121) is fixedly connected to the first housing (31), and the second fixed part (127) is fixedly connected to the second housing (32), and wherein an area of the main bending part (124) is larger than an area of the first bending part (122) and an area of the second bend part (126); and
after the holding plate (12) is folded, the first fixed part (121) and the second fixed part (127) approach each other, the main bending part (124) bends toward a folding direction, and the first bending part (122) and the second bending part (126) bend away from the folding direction.

2. The foldable device (30) according to claim 1, wherein the hinge (20) comprises a main body, and a first foldable assembly and a second foldable assembly that are symmetrically disposed with respect to the main body;
the first foldable assembly comprises:
a first swing connecting rod;
a first swing arm, wherein one end of the first swing arm is rotatably connected to the main body, and the other end of the first swing arm is rotatably connected to the first swing connecting rod;
a first driven arm, wherein one end of the first driven arm is rotatably connected to the main body, and the other end of the first driven arm is slidably connected to the first swing connecting rod; and
a first support plate, rotatably connected to the first swing connecting rod, and slidably connected to the first swing arm or the first driven arm, wherein
the second foldable assembly comprises:
a second swing connecting rod;
a second swing arm, wherein one end of the second swing arm is rotatably connected to the main body, and the other end of the second swing arm is rotatably connected to the second swing connecting rod;
a second driven arm, wherein one end of the second driven arm is rotatably connected to the main body, and the other end of the second driven arm is slidably connected to the second swing connecting rod; and
a second support plate, rotatably connected to the second swing connecting rod, and slidably connected to the second swing arm or the second driven arm.

3. The foldable device (30) according to claim 2, wherein rotation axis centers of the first driven arm and the first swing arm on the main body are parallel to each other and do not coincide, and rotation axis centers of the second driven arm and the second swing arm on the main body are parallel to each other and do not coincide.

4. The foldable device (30) according to claim 2, when the first swing connecting rod and the second swing connecting rod rotate toward each other in opposite directions, the first swing connecting rod drives the first driven arm to rotate synchronously, the first swing connecting rod and the first swing arm extend and move relative to the first driven arm, the second swing connecting rod drives the second driven arm to rotate synchronously, and the second swing connecting rod and the second swing arm extend and move relative to the second driven arm, to increase a length of the hinge (20); and the first swing arm or the first driven arm that is slidably connected to the first support plate drives the first support plate to rotate forward relative to the first swing connecting rod, and the second swing arm or the second driven arm that is slidably connected to the second support plate drives the second support plate to rotate forward relative to the second swing connecting rod, so that the first support plate, the second support plate, and the main body enclose accommodation space; and
the first support plate is fixedly connected to the first connecting part (123), and the second support plate is fixedly connected to the second connecting part (125).

5. The foldable device (30) according to any one of claims 2 to 4, wherein when the first swing connecting rod and the second swing connecting rod rotate away from each other, the first swing connecting rod drives the first driven arm to rotate synchronously, the first swing connecting rod and the first swing arm contract and move relative to the first driven arm, the second swing connecting rod drives the second driven arm to rotate synchronously, and the second swing connecting rod and the second swing arm contract and move relative to the second driven arm, to reduce the length of the hinge (20); and the first swing arm or the first driven arm that is slidably connected to the first support plate drives the first support plate to rotate forward relative to the first swing connecting rod, and the second swing arm or the second driven arm that is slidably connected to the second support plate drives the second support plate to rotate forward relative to the second swing connecting rod, so that the first support plate, the second support plate, and the main body are flattened into a support surface.

6. A holding plate (12) for a foldable electronic device, comprising:
a first fixed part (121), a first bending part (122), a first connecting part (123), a main bending part (124), a second connecting part (125), a second bending part (126), and a second fixed part (127) that are sequentially disposed along a first direction, wherein the first direction is a direction from the first fixed part (121) to the second fixing part (127) when the holding plate (12) is flattened, and wherein the first connecting part (123) is more rigid than the first bending part (122) and the main bending part (124), and the second connecting part (125) is more rigid than the main bending part (124) and the second bending part (126), and wherein through holes are disposed in the main bending part, and wherein an area of the main bending part (124) is larger than an area of the first bending part (122) and an area of the second bend part (126; and
after the holding plate (12) is folded, the first fixed part (121) and the second fixed part (127) approach each other, the main bending part (124) bends toward a folding direction, and the first bending part (122) and the second bending part (126) bend away from the folding direction.

7. The holding plate (12) according to claim 6, wherein the holding plate is a metal plate, a glass plate, or a plastic plate.

8. The holding plate (12) according to claim 6, wherein through holes are disposed in the first bending part (122), the second bending part (126),

9. The holding plate (12) according to claim 1 or 8, wherein a plurality of through holes are arranged from one edge to another edge of the holding plate (12) in a second direction; and
the second direction is parallel to the plate surface of the holding plate (12), and is perpendicular to the first direction.

10. The holding plate (12) according to any one of claims 1 to 9, wherein the first connecting part (123) and the second connecting part (125) are symmetrically disposed with respect to the main bending part (124).

11. The holding plate (12) according to any one of claims 1 to 10, wherein after the holding plate (12) is folded, the first fixed part (121) and the second fixed part (127) are parallel to each other.

12. The holding plate (12) according to any one of claims 1 to 11, wherein the first bending part (122) and the second bending part (126) are symmetrically disposed with respect to the main bending part (124).

13. The holding plate (12) according to any one of claims 1 to 12, wherein the through hole (128) is long-strip-shaped, a length direction of the cross-sectional profile of the through hole (128) is perpendicular to the first direction.

14. A flexible display (10), comprising:
a flexible display panel (11), having a display surface and a back surface; and
a holding plate (12) according to any one of claims 6 to 13, wherein the holding plate (12) is disposed on the back surface of the flexible display panel (11).

15. The flexible display (10) according to claim 14, wherein the holding plate (12) is attached to the back surface of the flexible display panel (11) by using a bonding layer; and
the bonding layer is configured to bond at least the first fixed part (121) to the flexible display panel (11), the first connecting part (123) to the flexible display panel (11), the second connecting part (125) to the flexible display panel (11), and the second fixed part (127) to the flexible display panel (11).
